(19) Europäisches Patentamt
European Patent Office
Office européen des brevets

(11) **EP 2 326 042 B1**

(12) **FASCICULE DE BREVET EUROPEEN**

(45) Date de publication et mention
de la délivrance du brevet:
**03.04.2013 Bulletin 2013/14**

(51) Int Cl.:
***H04L 9/00*** *(2006.01)* ***H04L 9/06*** *(2006.01)*

(21) Numéro de dépôt: **10189241.2**

(22) Date de dépôt: **28.10.2010**

(54) **Procédé de détection d'une attaque par injection de fautes**

Verfahren zum Erkennen eines Angriffs durch Fehlerinjektion

Method for detecting an attack by fault injection

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.11.2009 FR 0958140**

(43) Date de publication de la demande:
**25.05.2011 Bulletin 2011/21**

(73) Titulaire: **STMicroelectronics (Rousset) SAS 13790 Rousset (FR)**

(72) Inventeur: **Teglia, Yannick 13720, BELCODENE (FR)**

(74) Mandataire: **de Beaumont, Michel 1bis, rue Champollion 38000 Grenoble (FR)**

(56) Documents cités:
**EP-A1- 2 280 511 US-A1- 2007 019 805**

- **BERTONI G ET AL: "Error analysis and detection procedures for a hardware implementation of the advanced encryption standard", IEEE TRANSACTIONS ON COMPUTERS, IEEE SERVICE CENTER, LOS ALAMITOS, CA, US LNKD- DOI:10.1109/TC.2003.1190590, vol. 52, no. 4, 1 avril 2003 (2003-04-01), pages 492-505, XP011095866, ISSN: 0018-9340**
- **KARPOVSKY M ET AL: "Robust protection against fault-injection attacks on smart cards implementing the advanced encryption standard", DEPENDABLE SYSTEMS AND NETWORKS, 2004 INTERNATIONAL CONFERENCE ON FLORENCE, ITALY 28 JUNE - 1 JULY 2004, PISCATAWAY, NJ, USA,IEEE LNKD-DOI:10.1109/DSN.2004.1311880, 28 juin 2004 (2004-06-28), pages 82-90, XP010710793, ISBN: 978-0-7695-2052-0**

## Description

Domaine

La présente invention concerne un procédé et un circuit de détection d'attaques par injection de fautes, et en particulier un procédé et un circuit assurant une détection sur la base de signatures.

État de l'art antérieur

Les circuits intégrés peuvent comprendre des circuits qui sont considérés comme sensibles du point de vue de la sécurité des données qu'ils manipulent, comme des clés d'authentification, des signatures, etc., ou du point de vue des algorithmes qu'ils utilisent, comme des algorithmes de chiffrement ou de déchiffrement. On souhaite que de telles informations restent secrètes, ce qui signifie qu'elles ne doivent pas être communiquées ou être détectables par des tiers ou par des circuits non autorisés.

Un procédé courant de piratage d'informations manipulées par un circuit intégré consiste à détecter les zones du circuit qui sont utilisées pendant le traitement de ces informations. Pour cela, le circuit est activé ou placé dans un environnement fonctionnel et des paquets de données à coder sont introduits en entrée. Pendant le traitement des données, la surface du circuit intégré est balayée par un laser pour injecter des fautes dans le fonctionnement du circuit. En analysant en parallèle les sorties du circuit, on peut déterminer les zones du circuit qui traitent les données. Après avoir localisé ces zones, le pirate peut concentrer des attaques sur ces zones afin de déterminer les données secrètes qui sont traitées.

Les signatures assurent un moyen de protection d'un circuit contre des attaques par injection de fautes. Une signature est générée sur la base d'une ou plusieurs valeurs de données qui vont être utilisées par un algorithme. Une signature est ensuite générée sur la base des mêmes valeurs de données après leur utilisation par l'algorithme. Une différence entre les deux signatures va indiquer l'occurrence d'une attaque. Une fois que le circuit de détection a détecté une telle attaque, il peut déclencher une contre-mesure, comme par exemple la remise à zéro du circuit et/ou l'incrémentation d'un compteur, ce qui rend le circuit intégré définitivement inactif une fois qu'un certain nombre de fautes ont été détectées.

Des attaques par canaux cachés sont un type différent d'attaques mettant en oeuvre par exemple une mesure de consommation d'énergie d'un circuit. Un brouillage assure un moyen de protection d'un circuit contre des attaques par canaux cachés. Le brouillage implique l'altération des entrées d'un algorithme en utilisant une variable aléatoire d'une façon non destructive.

Il serait souhaitable de prévoir des circuits dans lesquels un même groupe de valeurs de données peut être utilisé pour générer des signatures pour détecter des attaques par injection de fautes et être brouillé pour rendre plus difficiles des attaques par canaux cachés. Cependant, on rencontre des difficultés pour mettre en oeuvre des circuits qui combinent efficacement ces fonctions.

La publication "Error analysis and detection procedures for a hardware implementation of the advanced encryption standard", G. Bertoni et al., IEEE 2003, concerne la détection de fautes dans un réalisation AES.

La demande de brevet US 2007/0019805 concerne la détection de fautes en utilisant des codes non linéaire.

La publication "Robust protection against fault-injection attacks on smart cards implementing the advanced encryption standard", M. Karpovsky et al., IEEE 2004, concerne la protection contre des attaques par analyse différentielle d'injection de fautes.

La demande de brevet EP 2280511 concerne un procédé de traitement cryptographique de données. Le traitement comprend une étape de vérification d'une transformation. Ce document n'est publié qu'après la date de priorité de la présente demande de brevet.

Résumé

Un objet de modes de réalisation de la présente invention est de traiter au moins partiellement un ou plusieurs des problèmes de l'art antérieur.

Selon un aspect de la présente invention, on prévoit un procédé de détection d'une attaque par injection de fautes, comprenant : générer une première signature d'un premier groupe de valeurs de données ; générer un deuxième groupe de valeurs de données en effectuant une permutation du premier groupe de valeurs de données ; générer une deuxième signature du deuxième groupe de valeurs de données ; et comparer les première et deuxième signatures pour détecter une attaque par injection de fautes, caractérisé en ce que le deuxième groupe de valeurs de données est généré par un bloc de brouillage par application d'un algorithme de brouillage au premier groupe de valeurs de données sur la base d'une valeur de brouillage ; la première signature est générée en effectuant une unique opération arithmétique non-booléenne commutative entre toutes les valeurs de données du premier groupe ; et la second signature est générée en effectuant ladite unique opération arithmétique non-booléenne commutative entre toutes les valeurs de données du deuxième groupe.

Selon un mode de réalisation, la première signature et la deuxième signature sont générées sur la base du calcul suivant : $S_1=D_1+D_2+...+D_N$, $S_2=D_1'+D_2'+...+D_N'$, où $D_1$ à $D_N$ sont les valeurs de données du premier groupe et $D_1'$ à $D_N'$ sont les valeurs de données du deuxième groupe.

Selon un autre mode de réalisation de l'invention, la première signature $S_1$ et la deuxième signature $S_2$ sont générées sur la base du calcul suivant : $S_1=D_1xD_2x...xD_N$, $S_2=D_1'xD_2'x...xD_N'$, où $D_1$ à $D_N$ sont les valeurs de données du premier groupe et $D_1'$ à $D_N'$ sont les valeurs de données du deuxième groupe.

Selon un autre mode de réalisation, la permutation du premier groupe de valeurs de données est effectuée en appliquant la fonction OU-Exclusif entre chaque valeur de données du premier groupe et une valeur de brouillage.

Selon un autre mode de réalisation, ladite permutation du premier groupe de valeurs de données est effectuée par un décalage de l'adresse de chaque valeur de données selon une valeur de brouillage.

Selon un autre aspect de la présente invention, on prévoit un circuit de détection d'une attaque par injection de fautes comprenant : un bloc de brouillage agencé pour générer un deuxième groupe de valeurs de données en effectuant une permutation d'un premier groupe de valeurs de données ; un module de signature agencé pour générer une première signature du premier groupe de valeurs de données et une deuxième signature du deuxième groupe de valeurs de données ; et un comparateur agencé pour comparer les première et deuxième signatures pour détecter une attaque par injection de fautes, caractérisé en ce que le bloc de brouillage est agencé pour générer le deuxième groupe de valeurs de données par application d'un algorithme de brouillage au premier groupe de valeurs de données sur la base d'une valeur de brouillage ; et le module de signature est agencé pour générer la première signature en effectuant une unique opération arithmétique non-booléenne commutative entre toutes les valeurs de données du premier groupe, et pour générer la deuxième signature en effectuant ladite unique opération arithmétique non-booléenne commutative entre toutes les valeurs de données du deuxième groupe.

Selon un autre aspect de la présente invention, on prévoit un circuit intégré comprenant : un bloc cryptographique agencé pour effectuer une opération cryptographique sur le premier groupe brouillé de valeurs de données ; et le circuit susmentionné.

Selon un mode de réalisation, le premier groupe de valeurs de données est une table SBOX utilisée pendant une opération cryptographique DES (de l'anglais Data Encryption Standard - norme de chiffrement de données) ou AES (de l'anglais Advanded Encryption Standard - norme de chiffrement avancé).

Selon un autre aspect de la présente invention, on prévoit une carte à puce comprenant le circuit intégré susmentionné.

Selon un autre aspect de la présente invention, on prévoit un lecteur de cartes à puce comprenant le circuit intégré susmentionné.

## Brève description des dessins

Les objets, caractéristiques, aspects et avantages susmentionnés de l'invention, et d'autres encore, apparaîtront clairement à la lecture de la description détaillée de modes de réalisation, donnés à titre d'illustration et non de limitation, en faisant référence aux dessins joints, dans lesquels :

la figure 1 illustre un circuit de détection d'attaques par injection de fautes selon un mode de réalisation de la présente invention ;
les figures 2 et 3 illustrent le circuit de la figure 1 plus en détail selon des variantes de réalisation ;
la figure 4 illustre un exemple d'application du circuit de la figure 1 ; et
la figure 5 illustre un dispositif électronique comprenant un circuit de détection d'attaques par injection de fautes selon un mode de réalisation de la présente invention.

## Description détaillée

Dans un but de clarté, seules les étapes et éléments utiles à la compréhension de l'invention ont été représentés dans les figures et vont être décrits en détail. En particulier, le circuit destiné à remettre à zéro un circuit intégré ou à le rendre inactif à la détection d'une ou plusieurs injections de fautes n'a pas été détaillé, l'invention pouvant s'appliquer à tout circuit de la sorte. En outre, les fonctions principales du circuit intégré qui sont protégées n'ont pas été décrites en détail, l'invention étant compatible avec des circuits intégrés mettant en oeuvre toutes sortes de fonctions sensibles, comme des fonctions de chiffrement ou de déchiffrement, ou d'autres fonctions impliquant des données sensibles.

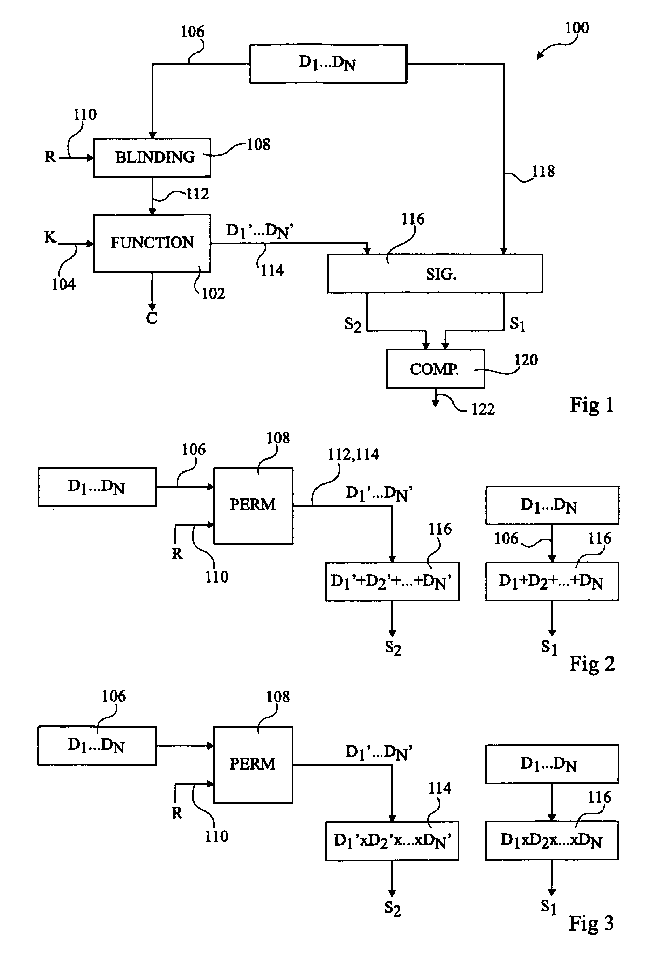

La figure 1 illustre un circuit 100 comprenant un module fonctionnel (FUNCTION) 102 qui, par exemple, met en oeuvre un algorithme impliquant des données sensibles, comme une clé de chiffrement ou similaire. Dans le présent exemple, le module 102 reçoit une clé K sur une ligne d'entrée 104.

Un groupe de valeurs de données $D_1$ à $D_N$ est fourni sur une ligne 106 à un bloc de brouillage (BLINDING) 108, qui applique un algorithme de brouillage à ces valeurs de données sur la base d'une valeur de brouillage R fournie sur une ligne d'entrée 110 au bloc de brouillage 108. La valeur de brouillage R est par exemple une valeur pseudo-aléatoire. Les valeurs de données brouillées $D_1'$ à $D_N'$ sont ensuite fournies sur une ligne 112 au module fonctionnel 102. Le module fonctionnel 102 met en oeuvre un algorithme qui utilise les valeurs de données brouillées $D_1'$ à $D_N'$, et fournit en sortie un résultat C, qui pourrait être un bloc de données crypté ou décrypté, ou une autre valeur.

Pendant qu'elles sont utilisées par le module fonctionnel 102, les valeurs de données brouillées $D_1'$ à $D_N'$ sont par exemple mémorisées dans un registre (non représenté en figure 1). A divers stades pendant l'exécution de l'algorithme par le bloc fonctionnel 102, et/ou à la fin de cette exécution, les valeurs brouillées $D_1'$ à $D_N'$ sont fournies sur une ligne 114 à un bloc de signature (SIG) 116. Les valeurs de données d'origine $D_1$ à $D_N$ sont aussi fournies au bloc de signature 116 sur une ligne 118.

Le bloc de signature 116 génère une signature $S_1$ sur la base des valeurs de données d'origine $D_1$ à $D_N$, et une signature $S_2$ sur la base des valeurs de données brouillées $D_1'$ à $D_N'$. Les signatures $S_1$ et $S_2$ sont ensuite comparées par un comparateur (COMP) 120, qui fournit une sortie sur une ligne de sortie 122 indiquant si les signatures concordent ou pas.

Le processus de brouillage mis en oeuvre par le bloc 108 et l'algorithme de signature utilisé par le bloc 116 pour générer chacune des signatures sont choisis de telle sorte que, en l'absence d'une attaque par injection de fautes, les signatures concordent. Ainsi, toute attaque par injection de fautes dirigée contre le module fonctionnel 102 est susceptible d'altérer une des valeurs de données brouillées $D_1'$ à $D_N'$.

Le processus de brouillage mis en oeuvre par le bloc de brouillage 108 est choisi de façon à mettre en oeuvre une permutation des valeurs de données $D_1$ à $D_N$. En d'autres termes, toutes les valeurs présentes dans le groupe de valeurs de données brouillées $D_1'$ à $D_N'$ sont aussi présentes dans le groupe de données d'origine $D_1$ à $D_N$. Un exemple d'un tel processus de brouillage est la fonction OU-Exclusif (XOR), avec une valeur de brouillage de la même longueur que les valeurs de données $D_1$ à $D_N$ et appliquée bit à bit entre chacune des valeurs de données et la valeur de brouillage R, en supposant par exemple que chaque valeur possible est représentée. De façon plus générale, un brouillage à l'aide de la fonction XOR entraîne une permutation lorsque les valeurs représentées dans les valeurs de données brouillées $D_1'$ à $D_N'$ sont présentes un même nombre de fois dans la valeur de données brouillée $D_1'$ à $D_N'$ correspondante. En d'autres termes, en appelant ensemble A les valeurs de données $D_1$ à $D_N$, et en supposant une valeur de brouillage R, la condition suivante (condition 1) doit être vérifiée :

pour i = 1 à N, V = $D_i$ et V' = $D_i$ XOR R, V' doit être présente dans A le même nombre de fois que V est présente dans A.

Par exemple, les valeurs de données du groupe $D_1$ à $D_N$ pourraient comprendre un ensemble complet de toutes les valeurs possibles pour une longueur en bits donnée. En d'autres termes, en supposant que chacune des valeurs de données $D_1$ à $D_N$ à une longueur de n bits, chacune des valeurs 0 à $2^{(n-1)}$ ne se produit qu'une seule fois dans les valeurs de données $D_1$ à $D_N$. Dans ce cas, il en résulte que toutes ces valeurs vont aussi être présentes une seule fois dans le groupe brouillé $D_1'$ à $D_N'$, et ainsi l'opération de brouillage entraîne une permutation des valeurs de données, sans ajouter ni retirer de nouvelles valeurs.

A titre de variante, dans le cas où les valeurs de données $D_1$ à $D_N$ ne remplissent pas la condition 1 susmentionnée, la fonction de brouillage 108 pourrait par exemple altérer l'ordre des valeurs de données, sur la base de la valeur de brouillage R. Par exemple, la valeur de brouillage R, qui est la même pour toutes les valeurs de données $D_1$ à $D_N$, pourrait être utilisée pour décaler la position des valeurs de données respective de R positions.

L'algorithme de signature appliqué par le bloc de signature 116 est choisi de façon à être une opération arithmétique unique non-booléenne commutative, appliquée, pour la signature $S_1$, entre toutes les valeurs de données du groupe $D_1$ à $D_N$, et pour la signature $S_2$, entre toutes les valeurs de données du groupe $D_1'$ à $D_N'$. En particulier, bien qu'il soit possible d'utiliser une fonction booléenne commutative, comme la fonction XOR calculée de la façon suivante pour la signature $S_1$ :

$$S_1 = D_1 \ \text{XOR} \ D_1 \ \text{XOR} \ D_2 \ \text{XOR...XOR} \ D_N,$$

un tel processus manque d'efficacité vis-à-vis de certaines attaques. En particulier, une simple fonction booléenne, comme la fonction XOR, appliquée entre deux valeurs de n bits ne va pas donner de différence là où le k-ième bit de chaque valeur est retourné. Par exemple, la combinaison XOR de deux valeurs calcule la distance de Hamming entre celles-ci, et donc si elles varient de la même quantité, la distance de Hamming reste identique.

Les présents inventeurs ont trouvé qu'une fonction arithmétique non-booléenne a une plus grande efficacité pour la détection de telles fautes.

Les figures 2 et 3 illustrent des exemples du circuit 100 dans lesquels le bloc de brouillage 108 effectue une permutation (PERM) sur les valeurs de données $D_1$ à $D_N$, par exemple en appliquant une fonction XOR, en utilisant la valeur de brouillage R.

En outre, comme cela est représenté en figure 2, les valeurs de données brouillées $D_1$' à $D_N$' présentes en sortie du bloc de permutation 108 sont fournies au bloc de signature 116, qui dans cet exemple effectue une addition de chacune des valeurs de données $D_1$' à $D_N$'. En outre, avant ou après la génération de la signature $S_2$, le bloc de signature 116 génère la signature $S_1$, en ajoutant entre elles chacune des valeurs de données d'origine $D_1$ à $D_N$. Ainsi, $S_1$ et $S_2$ sont calculées de la façon suivante :

$$S_1 = D_1 + D_2 + ... + D_N;$$

et

$$S_2 = D_1' + D_2' + ... + D_N'$$

Cette addition est une opération commutative ce qui signifie que l'ordre dans lequel est effectuée l'addition ne va pas affecter le résultat. Le résultat de cette addition va par exemple être une valeur représentée sur un nombre de bits plus grand que celui des valeurs de données $D_1$ à $D_N$. En supposant que chacune des valeurs de données $D_1$ à $D_N$ a une longueur en bits égale à n, les signatures $S_1$ et $S_2$ sont par exemple représentées par P bits, avec :

$$P = n\log_2(N) + 1$$

où N est le nombre total de valeurs de données $D_1$ à $D_N$. Par exemple, en supposant qu'on a 16 valeurs de données ayant chacune 4 bits, les signatures $S_1$ et $S_2$ sont toutes les deux représentées sur 17 bits.

Comme cela est représenté en figure 3, les valeurs de données brouillées $D_1$' à $D_N$' au niveau de la sortie du bloc de permutation 108 sont fournies au bloc de signature 116, qui dans cet exemple effectue une multiplication de chacune des valeurs de données $D_1$' à $D_N$'. En outre, avant ou après la génération de la signature $S_2$, le bloc de signature 116 génère la signature $S_1$, en multipliant entre elles chacune des valeurs de données d'origine $D_1$ à $D_N$. Ainsi, $S_1$ et $S_2$ sont calculés de la façon suivante :

$$S_1 = D_1 x D_2 x ... x D_N;$$

et

$$S_2 = D_1' x D_2' x ... x D_N'.$$

Cette multiplication est une opération commutative ce qui signifie que l'ordre dans lequel est effectuée la multiplication ne va pas affecter le résultat. Les signatures résultant de cette multiplication vont par exemple être des valeurs qui sont toutes représentées sur un nombre de bits plus grand que le nombre de bits des valeurs de données $D_1$ à $D_N$. En supposant que chacune des valeurs de données $D_1$ à $D_N$ a une longueur en bits égale à n, les signatures $S_1$ et $S_2$ sont par exemple représentées par P bits, avec :

$$P = n^N + 1$$

où N est le nombre total de valeurs de données $D_1$ à $D_N$. Par exemple, en supposant qu'on a 16 valeurs de données ayant chacune 4 bits, les signatures $S_1$ et $S_2$ vont toutes deux être représentées sur 64 bits.

En pratique, on définit par exemple une longueur m comme étant la longueur en bits du résultat de l'addition de la figure 2 ou de la multiplication de la figure 3, m étant supérieure à n, mais inférieure à P, et offrant un bon compromis pour assurer une distribution uniforme des sorties.

On pourrait utiliser d'autres opérations arithmétiques commutatives non-booléennes pour déterminer les signatures. Par exemple, on pourrait utiliser une combinaison d'additions et de multiplications, comme le produit de toutes les valeurs de données ajouté à, ou multiplié par la somme de toutes les valeurs de données. En outre ou à titre de variantes, pour réduire la longueur totale du produit, on peut mémoriser en tant que signature seulement un certain nombre de bits, comme par exemple les 16 bits les plus significatifs de la somme et/ou du produit.

De plus, a titre d'exemple, une variante d'opération arithmétique commutative non-booléenne pourrait être la suivante:

$$S_1 = D_1{}^k x D_2{}^k x ... x D_N{}^k;$$

et

$$S_2 = D_1'{}^k x D_2'{}^k x ... x D_N'{}^k$$

où k est une valeur constante.

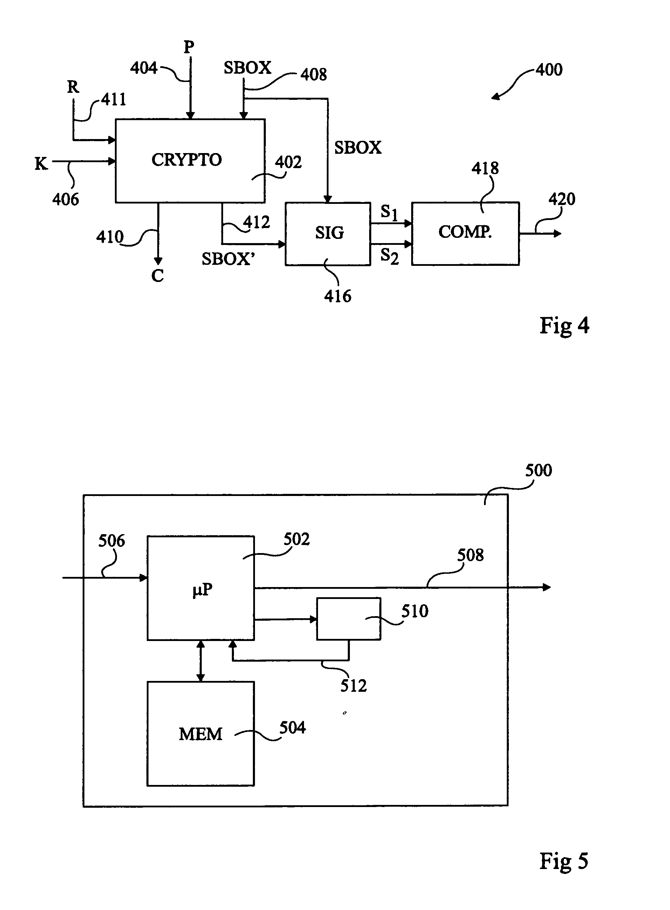

La figure 4 illustre un circuit 400 représentant une application particulière du circuit 100 de la figure 1, dans lequel le bloc fonctionnel est un bloc cryptographique (CRYPTO) 402 mettant en oeuvre un algorithme cryptographique, comme une opération de chiffrement ou de déchiffrement. Par exemple, le bloc 402 effectue un algorithme DES (Data Encryption Standard) ou AES (Advanced Encryption Standard), sur la base de paquets de données P arrivant sur une ligne d'entrée 404, d'une clé secrète K reçue sur une ligne d'entrée 406, et d'une table SBOX reçue sur une ligne d'entrée 408. Le bloc cryptographique 402 génère par exemple un paquet de données C en sortie, fourni sur une ligne de sortie 410.

Dans ce mode de réalisation, la SBOX comprend les valeurs de données $D_1$ à $D_N$. La SBOX utilisée dans de tels algorithmes a la forme d'une table utilisé pour effectuer une translation des données d'entrée. La SBOX peut être publique, et comprendre par exemple 256 multiplets de données, chacun comportant 8 bits. Les valeurs se trouvant dans la SBOX sont constituées d'un ensemble complet de valeurs pour le nombre de bits donné, autrement dit, en supposant que chaque valeur de données comporte 8 bits, cela comprend toutes les valeurs entre "00000000" et "11111111".

Dans ce mode de réalisation, le bloc cryptographique 402 effectue l'opération de brouillage sur la SBOX sur la ligne 408, en effectuant l'opération XOR entre chaque valeur de la SBOX et une valeur de brouillage R reçue sur une ligne d'entrée 411. Ensuite, à un stade particulier au cours du traitement de l'algorithme cryptographique, par exemple en même temps ou avant de fournir le paquet C en sortie, la SBOX brouillée est fournie sur une ligne de sortie 412 au bloc de signature (SIG) 416. Le bloc de signature 416 génère la signature $S_2$ en utilisant chaque valeur de la SBOX brouillée. En parallèle ou au préalable, le bloc de signature 416 génère une signature de la SBOX d'origine reçue sur la ligne 408. Les signatures $S_1$ et $S_2$ sont comparées par le comparateur (COMP) 418, qui fournit une sortie sur une ligne 420 indiquant si un désaccord a été détecté entre les signatures, ce qui indique une faute dans la SBOX d'origine ou dans la SBOX brouillée.

La figure 5 illustre un dispositif électronique 500 comprenant un microprocesseur ($\mu$P) 502, un bloc mémoire (MEM) 504, et une ligne d'entrée 506, qui fournit des valeurs d'entrée au microprocesseur 502. Le microprocesseur 502 fournit des valeurs de sortie sur une ligne de sortie 508. En outre, un circuit de protection 510 comprend le bloc de signature, le bloc comparateur et/ou de brouillage décrits ici. Ce circuit 510 fournit un signal d'alerte sur une ligne de sortie 512 qui est renvoyée vers le microprocesseur 502, qui déclenche par exemple une remise à zéro du microprocesseur 502 et/ou incrémente un compteur (non représenté en figure 5) qui va désactiver de façon permanente le microprocesseur dès qu'une certaine valeur de comptage a été atteinte.

Le dispositif électronique 500 est par exemple une carte à circuit intégré, comme par exemple une carte à puce, un lecteur de cartes à puce, comme un terminal de paiement par carte de crédit, ou un boîtier décodeur, un disque dur pour un ordinateur personnel ou un ordinateur portable, un ordinateur personnel ou un ordinateur portable, une machine de vente ou un autre dispositif manipulant des informations sensibles.

Un avantage des modes de réalisation décrits ici est que, en générant des signatures par la réalisation d'une opération arithmétique numérique non-booléenne commutative entre toutes les valeurs de données d'un groupe permuté et d'un groupe non permuté, on réalise une détection de fautes qui est efficace et mise en oeuvre relativement facilement. En particulier, le processus de signature est particulièrement efficace pour la détection d'erreurs qui, dans d'autres types de processus de signature, ne seraient pas détectées.

Un avantage particulier de la génération des signatures sur la base d'une addition est d'être facile à mettre en oeuvre, et d'être plus efficace que des signatures utilisant des opérateurs booléens. En particulier, la même faute injectée dans la même position de bit de deux des valeurs de données va être détectable. Par exemple, si deux valeurs de données sont égales à 5 ("0101") et 6 ("0110"), et une faute est injectée dans chacune de telle sorte que les valeurs deviennent 1 ("0001") et 2 ("0010"), l'opération XOR avant et après l'injection de fautes va toujours fournir "0011", tandis que la somme de ces valeurs va passer de 11 à 3, indiquant ainsi une faute.

Un avantage de la génération des signatures sur la base d'une multiplication de toutes les valeurs de données est qu'on peut détecter même des fautes opposées injectées dans la même position de bit de valeurs différentes. Par exemple, si deux valeurs de données sont égales à 5 et 6, et chacune se voit injecter une faute dans son bit le moins significatif, les valeurs vont devenir 4 et 7 respectivement. La somme de ces valeurs va encore être égale à 11, mais le produit de ces valeurs sera passé de 30 à 28, indiquant ainsi une faute.

Bien qu'on ait décrit un certain nombre de modes de réalisation particuliers de la présente invention, l'homme de l'art remarquera qu'on peut appliquer de nombreuses variantes et de nombreux changements.

Par exemple, l'homme de l'art remarquera que les modes de réalisation décrits ici peuvent être appliqués à une large gamme de circuits dans lesquels on utilise une vérification de signature pour détecter des fautes.

En outre, l'homme de l'art remarquera que les modes de réalisation décrits ici peuvent être mis en oeuvre sous forme de logiciel, de matériel ou d'une combinaison des deux. En outre, les caractéristiques décrites en relation avec les divers modes de réalisation pourraient être combinées sous forme d'une combinaison quelconque dans des variantes de réalisation.

## Revendications

1. Procédé de détection d'une attaque par injection de fautes, comprenant les étapes suivantes :

   générer une première signature ($S_1$) d'un premier groupe de valeurs de données ($D_1$... $D_N$) ;
   générer un deuxième groupe de valeurs de données ($D_1$'...$D_N$') en effectuant une permutation du premier groupe de valeurs de données ;
   générer une seconde signature ($S_2$) du deuxième groupe de valeurs de données ; et
   comparer les première et deuxième signatures pour détecter une attaque par injection de fautes, **caractérisé en ce que** :

   le deuxième groupe de valeurs de données est généré par un bloc de brouillage (108) par application d'un algorithme de brouillage au premier groupe de valeurs de données sur la base d'une valeur de brouillage (R) ;
   la première signature est générée en effectuant une unique opération arithmétique non-booléenne commutative entre toutes les valeurs de données du premier groupe ; et
   la seconde signature est générée en effectuant ladite unique opération arithmétique non-booléenne commutative entre toutes les valeurs de données du deuxième groupe.

2. Procédé selon la revendication 1, dans lequel la première signature ($S_1$) et la deuxième signature ($S_2$) sont générées sur la base du calcul suivant :

$$S_1 = D_1 + D_2 + ... + D_N, \quad S_2 = D_1' + D_2' + ... + D_N'$$

   où $D_1$ à $D_N$ sont les valeurs de données du premier groupe et $D_1$' à $D_N$' sont les valeurs de données du deuxième groupe.

3. Procédé selon la revendication 1, dans lequel la première signature ($S_1$) et la deuxième signature ($S_2$) sont générées sur la base du calcul suivant :

$$S_1 = D_1 \times D_2 \times ... \times D_N, \quad S_2 = D_1' \times D_2' \times ... \times D_N'$$

   où $D_1$ à $D_N$ sont les valeurs de données du premier groupe et $D_1$' à $D_N$' sont les valeurs de données du deuxième groupe.

4. Procédé selon l'une quelconque des revendications 1 à 3, dans lequel la permutation du premier groupe de valeurs de données est effectuée en appliquant la fonction OU-Exclusif entre chaque valeur de données du premier groupe et une valeur de brouillage (R).

5. Procédé selon l'une quelconque des revendications 1 à 3, dans lequel la permutation du premier groupe de valeurs de données est effectuée en décalant l'adresse de chaque valeur de données selon une valeur de brouillage (R).

6. Circuit de détection d'une attaque par injection de fautes, comprenant :

un bloc de brouillage (108) agencé pour générer un deuxième groupe de valeurs de données en effectuant une permutation d'un premier groupe de valeurs de données ;
un module de signature (114, 116) agencé pour générer une première signature ($S_1$) du premier groupe de valeurs de données ($D_1...D_N$) et une deuxième signature ($S_2$) du deuxième groupe de valeurs de données ($D_1'...D_N'$) ; et
un comparateur (118) agencé pour comparer les première et deuxième signatures pour détecter une attaque par injection de fautes, **caractérisé en ce que** :

le bloc de brouillage (108) est agencé pour générer le deuxième groupe de valeurs de données par application d'un algorithme de brouillage au premier groupe de valeurs de données sur la base d'une valeur de brouillage (R) ; et
le module de signature est agencé pour générer la première signature en effectuant une unique opération arithmétique non-booléenne commutative entre toutes les valeurs de données du premier groupe, et pour générer la deuxième signature en effectuant ladite unique opération arithmétique non-booléenne commutative entre toutes les valeurs de données du deuxième groupe.

7. Circuit intégré comprenant :

un bloc cryptographique (102) agencé pour effectuer une opération cryptographique sur le premier groupe brouillé de valeurs de données ($D_1'$ à $D_N'$) ; et
le circuit selon la revendication 6.

8. Circuit intégré selon la revendication 7, dans lequel le premier groupe de valeurs de données est une table SBOX utilisée pendant une opération cryptographique DES (Data Encryption Standard) ou AES (Advanced Encryption Standard).

9. Carte à puce comprenant le circuit intégré selon la revendication 7 ou 8.

10. Lecteur de cartes à puce comprenant le circuit intégré selon la revendication 7 ou 8.

**Claims**

1. A method of detecting a fault attack comprising:

generating a first signature ($S_1$) of a first group of data values ($D_1...D_N$);
generating a second group of data values ($D_1'...D_N'$) by performing a permutation of the first group of data values;
generating a second signature ($S_2$) of the second group of data values; and
comparing the first and second signatures to detect a fault attack, **characterized in that**:

the second group of data values is generated by a blinding block (108) by applying a blinding algorithm to the first group of data values, based on a blinding value (R);
the first signature is generated by performing a single commutative non-Boolean arithmetic operation between all the data values of the first group, and
the second signature is generated by performing said single commutative non-Boolean arithmetic operation between all the data values of the second group.

2. The method of claim 1, wherein the first signature ($S_1$) and second signature ($S_2$) are generated based on the following calculation:

$$S_1 = D_1 + D_2 + ... + D_N, \quad S_2 = D_1' + D_2' + ... + D_N'$$

wherein $D_1$ to $D_N$ are the data values of the first group and $D_1'$ to $D_N'$ are the data values of the second group.

3. The method of claim 1, wherein the first signature ($S_1$) and second signature ($S_2$) are generated based on the following calculation:

$$S_1 = D_1 x D_2 x ... x D_N, \quad S_2 = D_1' x D_2' x ... x D_N'$$

wherein $D_1$ to $D_N$ are the data values of the first group and $D_1'$ to $D_N'$ are the data values of the second group.

4. The method of any of claims 1 to 3, wherein said permutation of the first group of data values is performed by applying the exclusive OR between each data value of the first group and a blinding value (R).

5. The method of any of claims 1 to 3, wherein said permutation of the first group of data values is performed by shifting the address of each data value by a blinding value (R).

6. A circuit for detecting a fault attack comprising:

a blinding block (108) arranged to generate a second group of data values by performing a permutation of a first group of data values;
a signature unit (114, 116) arranged to generate a first signature ($S_1$) of the first group of data values ($D_1...D_N$) and a second signature ($S_2$) of the second group of data values ($D_1'...D_N'$) ; and
a comparator (118) arranged to compare the first and second signatures to detect a fault attack, **characterized in that**:

the blinding block (108) is arranged to generate the second group of data values by applying a blinding algorithm to the first group of data values, based on a blinding value (R); and
the signature unit is arranged to generate the first signature by performing a single commutative non-Boolean arithmetic operation between all the data values of the first group and the signature unit is arranged to generate the second signature by performing said single commutative non-Boolean arithmetic operation between all the data values of the second group.

7. An integrated circuit comprising:

a cryptographic block (102) arranged to perform a cryptographic operation on the blinded first group of data values ($D_1'$ to $D_N'$); and
the circuitry of claim 6.

8. The integrated circuit of claim 7, wherein said first group of data values is an SBOX used during a DES or AES cryptographic operation.

9. An IC card comprising the integrated circuit of claim 7 or 8.

10. An IC card reader comprising the integrated circuit of claim 7 or 8.


**Patentansprüche**

1. Ein Verfahren zum Detektieren einer Fehlerattacke, wobei folgendes vorgesehen ist:

Erzeugen einer ersten Signatur ($S_1$) von einer ersten Gruppe von Datenwerten ($D_1...D_N$);
Erzeugen einer zweiten Gruppe von Datenwerten ($D_1'...D_N'$) durch Ausführen einer Permutation der ersten Gruppe von Datenwerten;
Erzeugen einer zweiten Signatur ($S_2$) der zweiten Gruppe von Datenwerten; und
Vergleichen der ersten und zweiten Signaturen, um eine Fehlerattacke zu detektieren, **dadurch gekennzeichnet, dass**
die zweite Gruppe von Datenwerten durch einen Blindungsblock (108) erzeugt wird, und zwar durch Anlegen eines Blinding-Algorithmus an die erste Gruppe von Datenwerten basierend auf einem Blinding-Wert (R);
wobei die erste Signatur erzeugt wird durch Ausführen einer einzigen kommutativen Nicht-Buhlschen Rechen- oder Arithmetik-Operation zwischen sämtlichen Datenwerten der ersten Gruppe, und
wobei die zweite Signatur erzeugt wird durch Ausführen der erwähnten einzigen kommutativen, Nicht-Buhlschen Rechenoperation zwischen sämtlichen Datenwerten der zweiten Gruppe.

2. Verfahren nach Anspruch 1, wobei die erste Signatur ($S_1$) und die zweite Signatur ($S_2$) basierend auf der folgenden Berechnung erzeugt werden:

$$S_1 = D_1+D_2+...+D_N, \quad S_2 = D_1'+ D_2'+...+D_N'$$

wobei $D_1$ bis $D_N$ die Datenwerte der ersten Gruppe und $D_1'$ bis $D_N'$ die Datenwerte der zweiten Gruppe sind.

3. Verfahren nach Anspruch 1, wobei die erste Signatur ($S_1$) und die zweite Signatur ($S_2$) basierend auf der folgenden Berechnung erzeugt werden:

$$S_1 = D_1xD_2x...xD_N, \quad S_2 = D_1'xD_2'x...xD_N'$$

wobei $D_1$ bis $D_N$ die Datenwerte der ersten Gruppe und $D_1'$ bis $D_N'$ die Datenwerte der zweiten Gruppe sind.

4. Verfahren nach einem der Ansprüche 1 bis 3, wobei die erwähnte Permutation der ersten Gruppe von Datenwerten ausgeführt wird durch Anwenden des exklusiven ODERs zwischen jedem Datenwert der ersten Gruppe und einem Blindingwert (R).

5. Das Verfahren nach einem der Ansprüche 1 bis 3, wobei die Permutation der ersten Gruppe von Datenwerten ausgeführt wird durch Verschieben der Adresse jedes Datenwertes durch einen Blindingwert (R).

6. Eine Schaltung zum Detektieren einer Fehlerattacke, wobei folgendes vorgesehen ist:

ein Blindingblock (108) angeordnet zur Erzeugung einer zweiten Gruppe von Datenwerten durch Ausführen einer Permutation einer ersten Gruppe von Datenwerten;
eine Signatureinheit (114, 116) angeordnet zur Erzeugung einer ersten Signatur ($S_1$) der ersten Datengruppenwerte ($D_1...D_N$) und einer zweiten Signatur ($S_2$) der zweiten Gruppe von Datenwerten ($D_1'...D_N'$); und
ein Komparator bzw. eine Vergleichsschaltung (118) angeordnet zum Vergleichen der ersten und zweiten Signaturen, um eine Fehlerattacke zu detektieren, **dadurch gekennzeichnet,**
**dass** der Blindingblock (108) angeordnet ist zur Erzeugung mit der zweiten Gruppe von Datenwerten durch Anlegen eines Blindingalgorithmus an die erste Gruppe von Datenwerten basierend auf einem Blindingwert (R); und
**dass** die Signatureinheit angeordnet ist zur Erzeugung der ersten Signatur durch Ausführen einer einzigen kommutativen Nicht-Buhlschen Rechenoperation zwischen sämtlichen Datenwerten der ersten Gruppe und wobei die Signatureinheit angeordnet ist zur Erzeugung der zweiten Signatur durch Ausführen der erwähnten einzigen kommutativen Nicht-Buhlschen Rechenoperation zwischen sämtlichen Datenwerten der zweiten Gruppe.

7. Eine integrierte Schaltung, die folgendes aufweist:

einen kryptographischen Block (102) angeordnet zur Ausführung einer kryptographischen Operation auf der geblindeten ersten Gruppe von Datenwerten ($D_1'$ bis $D_N'$), und
die Schaltung nach Anspruch 6.

8. Integrierte Schaltung nach Anspruch 7, wobei die erste Gruppe von Datenwerten ein SBox ist, verwendet während einer DES oder AES kryptographischen Operation.

9. Eine IC-Karte, die die integrierte Schaltung des Anspruchs 7 oder 8 aufweist.

10. Ein IC-Kartenleser der folgendes aufweist:

Eine integrierte Schaltung nach Anspruch 7 oder 8.

Fig 1

Fig 2

Fig 3

Fig 4

Fig 5

## RÉFÉRENCES CITÉES DANS LA DESCRIPTION

**Documents brevets cités dans la description**

- US 20070019805 A

- EP 2280511 A

**Littérature non-brevet citée dans la description**

- **G. BERTONI et al.** Error analysis and detection procedures for a hardware implementation of the advanced encryption standard. *IEEE,* 2003

- **M. KARPOVSKY et al.** Robust protection against fault-injection attacks on smart cards implementing the advanced encryption standard. *IEEE,* 2004